(19) Europäisches Patentamt
European Patent Office
Office européen des brevets

(11) **EP 4 166 216 A1**

(12) **EUROPEAN PATENT APPLICATION**

(43) Date of publication:
**19.04.2023 Bulletin 2023/16**

(21) Application number: **21202999.5**

(22) Date of filing: **15.10.2021**

(51) International Patent Classification (IPC):
**B01D 53/04** (2006.01)  **B01D 53/047** (2006.01)
**C01B 3/00** (2006.01)

(52) Cooperative Patent Classification (CPC):
**B01D 53/047; B01D 53/0462; C01B 3/00;**
B01D 2253/104; B01D 2253/108; B01D 2253/25;
B01D 2256/16; B01D 2257/504; B01D 2259/40007;
B01D 2259/40009; B01D 2259/40045;
B01D 2259/4009

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEDERLANDSE ORGANISATIE VOOR
TOEGEPAST-
NATUURWETENSCHAPPELIJK ONDERZOEK
TNO
2595 DA 's-Gravenhage (NL)**

(72) Inventor: **The designation of the inventor has not
yet been filed**

(74) Representative: **Nederlandsch Octrooibureau
P.O. Box 29720
2502 LS The Hague (NL)**

(54) **OPTIMIZATION OF A PRESSURE SWING ADSORPTION PROCESS**

(57) The invention concerns an optimization method for a pressure swing adsorption process for separating $CO_2$ from a feed gas by adapting the ratio of rinse steam to purge steam at a fixed amount of total steam.

*Fig. 1*

Rinse steam variation

**Description**

**Field of the invention**

The present invention relates to field of pressure swing adsorption processes for separating of $CO_2$ from a gas, in particular in the context of a sorption-enhanced water gas shift (SEWGS) process.

**Background art**

Energy-intensive sectors such as steel, refining and chemical industries are still largely dependent on fossil fuels and raw materials, so that it remains important to capture and reuse the released $CO_2$. Unused $CO_2$ can be stored safely, for example in depleted natural gas fields in the North Sea. In the long term, negative $CO_2$ emissions may become the target, which can be obtained by, for example, storing the released $CO_2$ in the use of biomass. The overall reduction in the $CO_2$ emitted into the atmosphere is one of the major challenges in the present-day society, especially for industries where large amounts of carbon atoms remain as side-product, which are typically emitted as $CO_2$.

Pressure swing adsorption (PSA) is a promising technology to remove $CO_2$ from a gas stream; also for $CO_2$ producing industries. In the context of $CO_2$ producing industries, $CO_2$ can be captured pre- and/or post-combustion by PSA. In a PSA process for removing $CO_2$ from a gas such gas stream passes an adsorbent at a first pressure and $CO_2$ is adsorbed, therewith providing a $CO_2$ depleted gas stream, subsequently at a second pressure $CO_2$ desorbs therewith providing a $CO_2$ rich gas stream. Typically the reactor containing the adsorbent at the first pressure is rinsed with a gas to remove the $CO_2$ depleted gas stream after the adsorption and is purged with a gas stream at the second pressure to remove the last bit of $CO_2$ after the desorption.

A specific form of pressure swing adsorption is the sorption-enhanced water-gas shift (SEWGS) process. This process has been developed for the conversion of CO to $H_2$ and $CO_2$, allowing the formation of a $CO_2$ product stream and an $H_2$ product stream, wherein $CO_2$ is captured by means of pressure swing adsorption and reused. This process can be employed to purify the $H_2$ gas in a syngas mixture containing CO and/or $CO_2$, to obtain a $H_2$ product stream and a by-product stream wherein the incoming carbon atoms are captured in a $CO_2$ stream. The $CO_2$ product stream may then be subjected to $CO_2$ storage and as such eliminate $CO_2$ emissions into the atmosphere. Removal and subsequent storage of $CO_2$ from other gases can be accomplished in similar fashion.

In addition to pressure swing adsorption of $CO_2$ that is not enhanced, for the SEWGS process the water shift reaction simultaneously takes place during adsorption. Considering that $CO_2$ is adsorbed, the equilibrium of the water shift reaction shifts towards the formation of $H_2$ and $CO_2$.

Typically, the optimal design of PSA technologies aims to: (1) Maximize separation performances (i.e. product recovery and purity); (2) Optimize energy performances (3); Minimize processing costs. When PSA physical models are used, this results in a mixed nonlinear integer optimization problem with partial differential and algebraic equation (PDAE) integration. The use of accurate physical models to conduct this optimization is thereby known to be computationally expensive and intricated. However, these models are also more suited to generate new process knowledge, in contrast to reduced order models, that are also being investigated.

When physical models are used, the main challenge is to optimize both process parameters, like pressure and steam inputs, and the cycle design. Different approaches are available to deal with this challenge. Some approaches make use of process superstructures. Others fix either the process parameters or the cycle design. Alternatively, some authors have proposed to reduce the problem complexity by solving ideal single column cycles. These cycles do not meet multi-bed schedule constrains and do not account for the required number of columns, or idle times. However, the study of ideal single column cycles is found useful to generate process insights at the initial stage of the design. Concerning SEWGS optimization, the necessity of generating new process knowledge has driven different authors to focus mostly on using physical models to execute parametric sensitivities with prespecified cycle designs. First, Reijers et al. (Energy Procedia, 2011 (4), p1155-1161) conducted a parametric sensitivity on cycle time, feed flow rate, purge and rinse steam flows, with a fixed 6 columns cycle design, including one feed cocurrent pressure equalization, feed countercurrent rinse, feed countercurrent blow down, feed-countercurrent repressurization with partial recycle of the light H2 product and an idle step. An alternative 8 column cycle was studied by Boon et al. (Chemical Engineering Science, 2015 (122), p219-231). This cycle presents three feed countercurrent PEQs, feedcocurrent rinse and no idle steps, in comparison to Reijers's one. A single column full PDAE model is implemented on MATLAB and used to analyse separation performances over varying total cycle time, rinse and purge steam flow amounts. The same cycle, but with three feed co-current PEQs and feed counter current rinse steps, is studied by Jansen et al. (Energy Procedia, 2011 (37), p 2265-2273) analysing SEWGS separation performances for different purge and rinse flows.

As pointed out by Boon et al. (2015), Reijers observes that carbon purity (CP) and carbon capture ratio (CCR) rise proportionally with the supplied rinse and purge steam amounts, though with reducing gain after a certain point. However, it is not possible simultaneously to increase both CCR and CP by modifying only one variable, as CP drops with higher purge, as well as CCR with higher rinse. Only under specific regimes, CP may also rise with a higher purge input. According to Boon et al. (2015), CP is strongly influenced by the progression of the $CO_2$ front during the adsorption step. In most cases, a higher purge amount will cause the bed to be more deeply regenerated at the beginning of adsorption step. A cleaner bed will then further reduce the $CO_2$ front progression, and consequently the CP. More recently, Najmi et al. (Separation and purification technology, 2016 (157), p80-92) studied a multitrain configuration, including two trains of 8 columns. In that work, both feed flow rate and steam inputs are varied with a fixed cycle design. Interestingly, it is concluded that a modification of the rinse and purge steam inputs is not sufficient by itself to maintain $CO_2$ recovery and purity unchanged, while feed flow rate is varied. Accordingly, it is indicated that the duration of the adsorption step should be changed as well. This new duration would essentially be needed to compensate for the varying progression of the $CO_2$ front during the adsorption step.

So, in the state of the art for process optimization of a pressure swing adsorption process typically primary the purge steam is optimized and secondary the rinse steam. Not always the desired optimum with regards to CP and CCR can be found this way, as this way of optimization may lead away from the sensible region towards an asymptote. In addition the cycle time may need to be changed. Considering the state of the art, there is a need of a more efficient and reliable method of optimization of a PSA process. Moreover there is a need of a method that can identify process conditions that are more optimal compared to conditions that are found during conventional optimization. There is especially need for a robust method for optimization and/or for identifying optimal process conditions. There is also a need of a method of process optimization that keeps the cycle times constant whilst having desired CCR and CP, because lengthening the cycle time affects the overall process efficiency. There is also need of reaching desired CCR and CP at lower steam consumption.

The input of a pressure swing adsorption process is not always constant whilst downstream processes require a constant output of the PSA process. Upon changes of the input, the output will change. Therefore during operation of a pressure swing adsorption process there is a need for a fast optimization method that furthermore meet one or more of the requirements of efficient and reliable optimization, providing more optimal process conditions, keeping the cycle time the same and/or that is robust.

### Summary of the invention

The invention concerns the use of the ratio of the amount of rinse steam R divided by the amount of purge steam P (R/P) at a fixed amount of total steam T for optimization the carbon capture ratio CCR, carbon purity CP and/or T of a pressure swing adsorption process for separating $CO_2$ from a feed gas, wherein the process comprises a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$.

Moreover the invention also concerns a method for optimization the carbon capture ratio CCR, carbon purity CP and/or amount of total steam T of a pressure swing adsorption process for separating $CO_2$ from a feed gas, wherein the process is performed in a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$;

and wherein the method comprises a first step of varying between subsequent cycles the ratio of the amount of rinse steam R divided by the amount of purge steam P (R/P) while keeping the total amount of steam T constant.

Furthermore the invention concerns a method for operating a pressure swing adsorption process for separating $CO_2$ from a feed gas, wherein the process comprises a plurality of columns each containing a sorbent and arranged in cyclic mode, wherein the CCR, CP and/or T is optimized according to the method for optimization.

The inventors demonstrated that for a pressure swing adsorption process for separating $CO_2$ from a feed gas by fixing the total amount of steam T and varying the ratio of the rinse steam over purge steam an optimum in carbon capture ration and carbon purity can be identified. In conventional optimization R and P are changed iteratively. Considering a pressure swing adsorption process for separating $CO_2$ from a feed gas is a highly non-linear process this may lead to asymptotic solutions for which either the target value for CCR or CP cannot be reached. Consequently the cycle time may be involved as a steering parameter for optimization which is highly undesirable. Moreover as demonstrated, even when a desired working area for CP and CCR is identified by a conventional optimization, the total steam usage often is higher than needed. In contrary the optimization method of the invention is reliable and converging in the sense that always a solution will be identified. By identifying R/P for which CP ≈ CCR the sensitive region of the system is identified. In this region only the total amount of steam needs to be adapted to change both CP and CCR towards a desired level. This reduces the complexity of further optimization considerably. As the examples demonstrate in the regions where CP >> CCR or CP << CCR the sensitivity towards CCR or CP is very low or even absent. When a conventional optimization starts in these regions at best more optimization steps need to be taken compared to the inventive method, but at worst no optimum can be found. Furthermore conventional optimizations provide no guidance for additional optimizations so that for changing set point more optimization steps need to be taken compared to the inventive method.

**List of preferred embodiments**

1. Use of the ratio of the amount of rinse steam R divided by the amount of purge steam P (R/P) at a fixed amount of total steam T for optimization the carbon capture ratio CCR, carbon purity CP and/or T of a pressure swing adsorption process for separating $CO_2$ from a feed gas, wherein the process comprises a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$.

2. A method for optimization the carbon capture ratio CCR, carbon purity CP and/or amount of total steam T of a pressure swing adsorption process for separating $CO_2$ from a feed gas, wherein the process is performed in a plurality of columns each containing a sorbent and arranged in cyclic mode,
wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$;

and wherein the method comprises a first step of varying between subsequent cycles the ratio of the amount of rinse steam R divided by the amount of purge steam P (R/P) while keeping the total amount of steam T constant.
3. The method according to embodiment 2, wherein the first step of varying R/P ends when the ratio of the carbon capture ratio divided by the carbon purity (CCR/CP) is in the range of 0.90 - 1.10, preferably in the range of 0.95 - 1.05, more preferably in the range of 0.98 - 1.02.
4. The method according to embodiment 2 or 3, wherein in a second step T is varied between subsequent cycles whilst keeping R/P constant.
5. The method according to any one of any one of embodiments 2-4 or the use according to any one of embodiment 1 wherein after optimization the CCR and CP are both in the range of 80 — 100 mole%, preferably in the range of 90 - 100 mole%, more preferably in the range of 95 - 100 mole%.
6. The method according to any one of embodiments 2-5 or the use according to embodiment 1 or 5, wherein the cycle time $t_c$ is constant during optimization.
7. The method according to any one of embodiments 2-6 or the use according to embodiment 1 or 5-6 wherein the feed gas composition and feed gas flux is constant during optimization.
8. The method according to any one of any one of embodiments 2-7 or the use according to any one of embodiment 1 or 5-7 wherein the optimization is triggered by a change in feed gas composition and/or flux, preferably wherein the cycle time $t_c$ is kept constant upon the change in feed gas composition and/or flux.
9. The method according to any one of any one of embodiments 2-8 or the use according to any one of embodiment 1 or 5-8 wherein each step of the optimization includes a comparison of the process performance with a predetermined threshold process performance, wherein the process performance is defined as a range for CCR and a range for CP, and wherein the predetermined threshold process performance is that CCR and CP are both in the range of 80 - 100 mole%, preferably in the range of 90 - 100 mole%, more preferably in the range of 95 - 100 mole%, preferably wherein the optimization concludes when the process performance is in the range of the predetermined threshold process performance, and the selected values for R, P and T are used for further operating the pressure swing adsorption process.

10. The method according to any one of any one of embodiments 2-9 or the use according to any one of embodiment 1 or 5-9 wherein after optimization:

- T is lower at a same or higher sum of CCR and CP, or
- the sum of CCR and CP is higher and T is the same or lower

compared to before optimization;
preferably after optimization:

- the CCR is the same or higher, the CP is the same or higher and T is lower,
- the CCR is higher, the CP is the same or higher and T is the same or lower, or
- the CCR is the same or higher, the CP is higher and T is the same or lower compared to before optimization.

11. The method according to any one of any one of embodiments 2-10 or the use according to any one of embodiment 1 or 5-10 wherein the feed gas comprises $CO_2$ and $H_2$.

12. The method according to any one of any one of embodiments 2-11 or the use according to any one of embodiment 1 or 5-11, wherein the feed gas is obtained from a water gas shift reactor that is fed with syngas, and/or wherein the feed gas comprises $CO_x$, wherein x = 1 - 2, and $H_2O$ and the sorbent material is a catalyst for the formation of $H_2$ and $CO_2$ from the feed gas.

13. The method according to any one of any one of embodiments 2-12 or the use according to any one of embodiment 1 or 5-12, wherein $P_R$ is in the range of 5 - 50 bar and Pp is in the range of 1 - 5 bar.

14. The method according to any one of any one of embodiments 2-13 or the use according to any one of embodiment 1 or 5-13, wherein the sorbent material is selected from the group consisting of alumina, hydrotalcites and molecular sieves wherein preferably the alumina or hydrotalcite is alkali-promoted, preferably the sorbent material is an alkali-promoted hydrotalcite material, more preferably the sorbent material is potassium promoted hydrotalcite.

15. A method for operating a pressure swing adsorption process for separating $CO_2$ from a feed gas, wherein the process comprises a plurality of columns each containing a sorbent and arranged in cyclic mode,

wherein the CCR, CP and/or T is optimized according to the method for optimization according to any one of embodiments 2-14,
preferably wherein upon a change in feed gas composition and/or flux new R, P and T are selected based on the method of any one of embodiment 2-14.

**Brief description of the drawings**

The present invention will be discussed in more detail below, with reference to the attached drawings, in which:

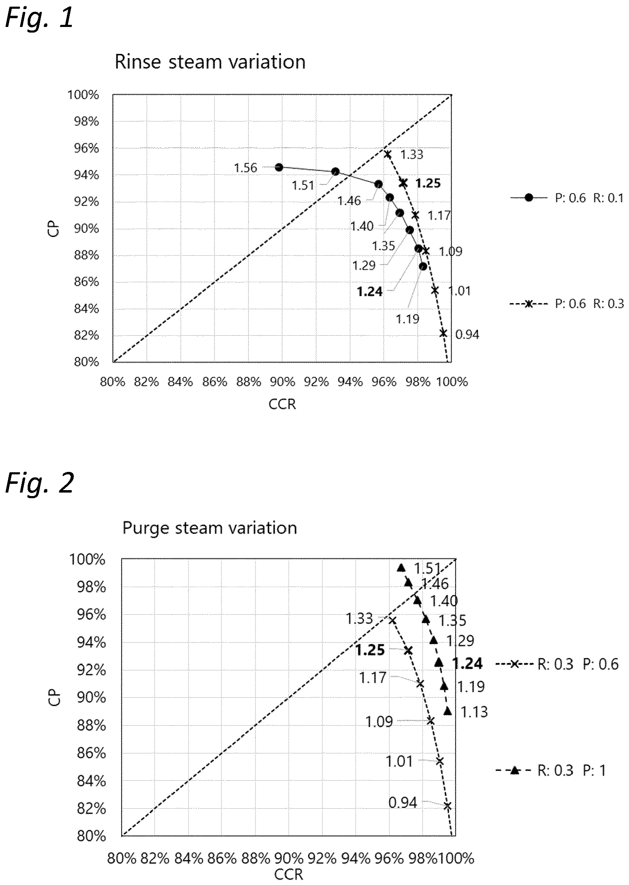

Figure 1 depicts a Pareto plot with CP on the y-axis and CCR on the x-axis as a function of different amounts of P and R. P and R have been normalized for the amount of carbon fed to the system. The Pareto plot represent modelling outcomes for a pressure swing adsorption process for separating $CO_2$ from a feed gas as described in the example. For two different rinse steam amounts the effect of the feed rate is varied.

Figure 2 depicts a Pareto plot with CP on the y-axis and CCR on the x-axis as a function of different amounts of P and R. P and R have been normalized for the amount of carbon fed to the system. The Pareto plot represent modelling outcomes for a pressure swing adsorption process for separating $CO_2$ from a feed gas as described in the example. For two different purge steam amounts the effect of the feed rate is varied.

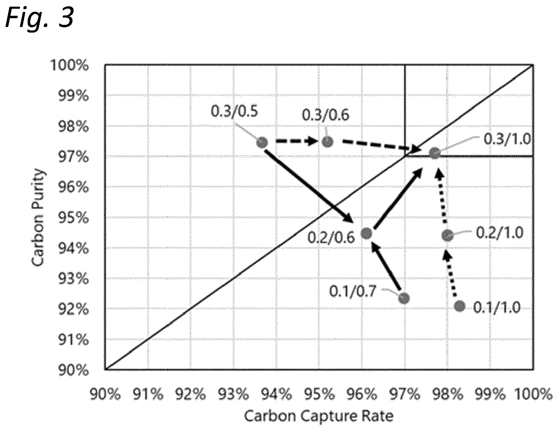

Figure 3 depicts a Pareto plot with CP on the y-axis and CCR on the x-axis as a function of different amounts of P and R. P and R have been normalized for the amount of carbon fed to the system. The Pareto plot represents modelling outcomes for a pressure swing adsorption process for separating $CO_2$ from a feed gas as described in the example. Flow is 1.406 kmol/s of carbon.

**Detailed description**

The invention provides a method for optimization the carbon capture ratio, carbon purity and/or amount of total steam of a pressure swing adsorption process. The inventors have found that by varying the ratio of the amount of purge steam divided by the amount of purge steam (R/P) while keeping the total amount of steam T constant the pressure swing adsorption process can be optimized more efficiently, so in less optimization steps. Moreover by applying this structured approach process setting can be identified that provide for a more optimal process compared to settings that are identified through conventional methods. A more optimal process has a higher carbon capture ratio, higher carbon purity and/or lower steam usage compared to a process that is optimized by conventional methods.

More specifically, the method according to the invention concerns a method for optimization the carbon capture ratio, carbon purity and/or total amount of steam of a pressure swing adsorption process for separating $CO_2$ from a feed gas, wherein the process comprises a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$;

and wherein the method comprises a first step of varying between subsequent cycles the ratio of the amount of rinse steam R divided by the amount of purge steam P (R/P) while keeping the total amount of steam T constant.

The invention furthermore concerns the use of the ratio of the amount of rinse steam R divided by the amount of purge steam P at a fixed amount of total steam T for optimization the carbon capture ratio CCR, carbon purity CP and/or T of a pressure swing adsorption process for separating $CO_2$ from a feed gas, wherein the process comprises a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$.

Or in different words, the invention furthermore concerns the use of one or more regeneration parameters for optimization the carbon capture ratio, carbon purity and/or amount of total steam of a pressure swing adsorption process for separating $CO_2$ from a feed gas, wherein the process comprises a plurality of columns each containing a sorbent and arranged in cyclic mode, wherein each cycle contains an adsorption mode, a rinse mode and a purge mode, wherein:

- in the adsorption mode, the column is being fed with the feed gas, thereby forming a sorbent material loaded with $CO_2$;
- in the rinse mode, the column is rinsed with rinse steam at a pressure $P_R$; and
- in the purge mode, the column is purged with purge steam at a pressure $P_P$,

wherein the regeneration parameters are at least the ratio of the amount of rinse steam divided by the amount of purge steam and the amount of total steam and the amount of total steam is constant.

The invention also concerns a method for operating a pressure swing adsorption process for separating $CO_2$ from a feed gas, wherein the process comprises a plurality of columns each containing a sorbent and arranged in cyclic mode, wherein the carbon capture ratio, carbon purity and/or amount of total steam is optimized according to the method for optimization.

*Pressure swing adsorption process*

Pressure swing adsorption is a well-known technology in which a species of gas is separated from a mix of species in a feed gas. The species to be separated adsorbs to an adsorption material at a first pressure and releases at a second different pressure. The adsorption material, which is also named a sorbent and is also named sorbent material is typically contained in a column. The sorbent may be present as fixed bed or fluidized bed. During pressure swing adsorption in a first step the feed gas is fed at a first pressure to the column and one of the gas species present in the feed gas adsorbs. Upon reaching the satiety point of the sorbent the gas feed is stopped and the column is rinsed with a rinse gas at the first pressure to remove the purified feed gas. Subsequently the pressure of the column is brought to a second pressure and the adsorbed gas releases from the sorbent at this pressure. To fully remove the adsorbed gas and to fully regenerate the sorbent the column is purged with a purge gas at the second pressure. Subsequently a new cycle starts.

In relation to the invention the purge gas and rinse gas preferably are steam so the purge gas preferably is purge steam and the rinse gas preferably is rinse steam. In relation to the invention the gas to be adsorbed is $CO_2$.

When using one column the process is a batch process. However since it is beneficial for process integration the pressure swing adsorption process is typically conducted in cyclic mode. In cyclic mode a plurality of columns are operated and two or more of these columns are in different modes. In cyclic mode each column undergoes the same sequence of modes and when each column underwent all modes one cycle has been completed. A cycle has a cycle time $t_c$. In this way a continuous inlet gas stream can be handled without buffering and a continuous outlet gas stream is realized.

The modes comprised are an adsorption mode during which the column is being fed with the feed gas, thereby forming a sorbent material loaded with $CO_2$, a rinse mode during which a column is rinsed with rinse steam at a pressure $P_R$ and a purge mode, during which the column is purged with purge steam at a pressure $P_P$. Furthermore the cycle may comprise a blowdown mode before going into purge mode, during blowdown mode pressure is released from a column coming from rinse mode and the resulting output product stream comprises the adsorbed $CO_2$ that is released from the sorbent upon the pressure release. Next to this optionally the cycle comprises a pressure equalization mode during which pressure between 2 columns is equalized, preferably wherein the pressure is equalized between a column coming from purge mode and a column coming from rinse mode. Pressure equalization provides for an efficient process considering the energy of a pressured column is not lost but transferred to a column having a lower pressure. Considering that not all modes necessarily take the same time some columns are optionally in idle mode for a part of the cycle providing for idle time. A column may also be in pre-blown mode preceding blow-down, wherein pressure in the column is reduced to establish a blowdown pressure in the range of 0.5 to 1.5 times the partial pressure of CO and $CO_2$ in the feed gas, preferably wherein the off-gas of the pre-blowdown step is recycled to the feed gas or collected as tail gas.

In an embodiment preferably each cycle of the pressure swing adsorption process contains an adsorption mode, a rinse mode and a purge mode, more preferable each cycle contains an adsorption mode, a rinse mode, a blowdown mode and a purge mode, even more preferably each cycle contains an adsorption mode, a rinse mode, a blowdown mode, a pressure equalization mode, and a purge mode, even more preferably each cycle contains an adsorption mode, a rinse mode, a pre-blown mode, a blowdown mode, a pressure equalization mode and a purge mode, most preferably each cycle contains an adsorption mode, a rinse mode, a pre-blown mode, a blowdown mode, a pressure equalization mode, an idle mode and a purge mode.

The columns of the pressure swing adsorption process are coupled. Coupling is that column have a connection so that material from one column may flow to a different column. The connection may be open or closed. Preferably, at least 2 columns are coupled, more preferably 2 — 20 columns, most preferably 4 — 10 columns. It is further preferred that one column requiring depressurisation is coupled to another column requiring repressurisation, thereby allowing one or more pressure equalisation steps which effect depressurisation of the first column after the rinse mode, and one or more respective pressure equalisation steps which effect repressurisation of the second column directly after the purge mode. In a more preferred embodiment, a multitude of columns each undergoing the cycle are coupled, wherein each of the multiple first columns requiring depressurisation is coupled to one of the multiple second columns in another step of the cycle requiring repressurisation, thereby allowing one or more pressure equalisation steps which effect depressurisation of the multiple first columns after the rinse mode, and one or more respective pressure equalisation steps which effect repressurisation of the multiple second columns directly after the purge mode.

In a preferred embodiment of the process according to the invention, each column undergoes the adsorption mode, the rinse mode, the blowdown mode, and the purge mode, and optionally one or more intermediate pressure equalisation modes, in sequential order.

The output streams of the pressure swing adsorption process are a $CO_2$ product stream and a second product stream. The second product stream is the feed gas depleted of $CO_2$. The $CO_2$ product stream consists of the gas phase that exits during blow down, species that desorb, plus $CO_2$ and purge steam that exit during the purge step.

*SEWGS*

In a preferred embodiment of the invention the pressure swing adsorption process is a sorption enhanced water gas shift process (SEWGS). A SEWGS process provides for the conversion of CO to $H_2$ and $CO_2$ combined with pressure swing adsorption, allowing the formation of a $CO_2$ product stream and an $H_2$ product stream. The conversion takes place in the column that is in adsorption mode. The adsorption of $CO_2$ draws the water gas shift equilibrium towards the formation of $H_2$ and $CO_2$. Preferably a pre water gas shift reactor (pre WGS reactor) is placed before the pressure swing adsorption process, the pre WGS reactor converts already part of the CO in $CO_2$ and when such pre WGS reactor is present the output of this reactor is the feed gas of the SEWGS process.

Sorption-enhanced water-gas shift reactions are known in the art. The adsorption mode can be performed in any way known in the art. The skilled person is capable of selecting an appropriate sorbent material and catalyst, as well as appropriate conditions for performing the water-gas shift reaction.

*Process conditions*

In a preferred embodiment the pressure in the column that is in adsorption mode is in the range of 15 - 50 bar, preferably in the range of 20 - 30 bar, most preferably in the range of 22 - 25 bar. 1 bar is 100,000 Pa, 1 bar is 100,000 N/m$^2$.

Preferably, the rinse mode is performed at substantially the same pressure as the adsorption mode, although a slight pressure change (typically a slight increase) may occur in view of the introduction of the rinse gas. The pressure during rinse mode and the pressure of the rinse steam $P_R$ typically is in the range of 20 - 50 bar, preferably in the range of 22 - 28 bar, more preferably in the range of 24 - 26 bar. The amount of steam provided during rinse mode may be in the range of 0.01 - 0.5 mole%, preferably 0.02 — 0.2 mole% or even as low as 0.02 — 0.1 mole%, based on the amount of $CO_x$ fed during adsorption mode wherein x = 1 or 2.

The pressure during purge mode and the pressure of the purge steam $P_P$ is preferably in the range of 1 - 5 bar, more preferably in the range of 1.5 - 3 bar. Preferably $P_P$ is in the range of 1 - 5 bar, more preferably in the range of 1.5 - 3 bar

*Metrics*

The amount of steam is expressed in mole $H_2O$, so the amount of rinse steam R, the amount of purge steam P and the amount of total steam are all expressed in mole $H_2O$. The amount concerns the amount per cycle. The amount of steam is therefore the sum of the amounts of steam provided during one cycle to all of the columns. Alternatively the amounts may also be expressed per time unit. Rinse steam is the steam provided during the rinse mode, purge steam is the steam provided during the purge mode. The amount of total steam is the sum of the amount of rinse steam and the amount of purge steam, so T=R+P. The amount of total steam T is also named the steam usage. The ratio of the amount of rinse steam and the amount of purge steam is the amount of rinse steam R divided by the amount of purge steam P or R/P. R, P and T may be normalized for the amount of carbon fed to the system. In that case R is the moles of $H_2O$ used for rinse divided by the moles of carbon fed to the system, P is the moles of $H_2O$ used for purge divided by the moles of carbon fed to the system and T is the total moles of $H_2O$ used divided by the moles of carbon fed to the system. These amounts may be per cycle or per time unit. T when normalized for the amount of carbon fed to the system is also named the total steam to feed carbon ratio.

The carbon capture ratio (CCR) is known in the art and concerns the extent of incoming carbon atoms that are captured as $CO_2$ in the $CO_2$ product stream. The carbon capture ratio (CCR) is expressed in mole% and may be calculated by dividing the moles of carbon per time unit or per cycle exiting the process through the $CO_2$ product stream by the moles of carbon per time unit or per cycle entering the process through the feed gas and multiplying by 100%. The carbon purity (CP) is known in the art and is also named carbon dioxide purity and concerns the mole% of $CO_2$ in the $CO_2$ product stream corrected for $H_2O$; CP = 100% $\times$ (mole% $CO_2$ in the product stream) / (100 - mole% $H_2O$ in the product stream). Mole% is known in the art.

The gas fluxes may be expressed in standard cubic metres per hour (Nm$^3$ hour$^{-1}$) or gas hourly space velocity (Nm$^3$ hour$^{-1}$ m$^{-3}$). The total steam to feed carbon ratio is expressed in mole $H_2O$ per time unit entering the process through the purge and rinse steam per mole carbon per time unit entering the process (mole $H_2O$ / mole Carbon).

*Feed gas*

In the context of the invention the feed gas comprises $CO_2$. In addition the feed gas comprises may also contain further gaseous components such as $H_2O$, inert gases (e.g. $N_2$, Ar, $CH_4$ and larger hydrocarbons, such as up to C4) and contaminants arising from the industrial process the feed gas is often derived from, such as syngas originating from reforming or gasification of fossil or biogenic feed gass, from which the feed originates (e.g. $H_2S$, NOx, etc.). Preferably the concentration of $CO_2$ in the feed gas is 1 - 80 mol% $CO_2$, more preferably 1 - 30 mol% $CO_2$, even more preferably 3 — 10 mol% $CO_2$. Preferably the feed gas comprises $CO_2$ and $H_2$.

*Feed gas - SEWGS*

In a preferred embodiment the pressure swing adsorption process for separating $CO_2$ from a feed gas is a Sorption Enhanced Water-Gas Shift process (SEWGS). In this context preferably the feed gas comprises $CO_x$, wherein x = 1 - 2, and $H_2O$ and the sorbent material is a catalyst for the formation of $H_2$ and $CO_2$ from the feed gas. The $CO_2$ molecules formed during the water-gas shift reaction and/or present in the feed are adsorbed onto the sorbent material, thereby forming a sorbent material loaded with $CO_2$. Typically, at the beginning of the adsorption mode, the sorbent material contains sorbed water molecules. During the adsorption mode water molecules are desorbed and $CO_2$ molecules are adsorbed. As such, $CO_2$ is removed from the product mixture of the water-gas shift reaction, thereby pushing the equilibrium towards the product side. The off gas of the column during the adsorption mode will thus contain $H_2$ and desorbed molecules, typically steam.

The feed comprises $CO_x$, wherein x = 1 - 2, and $H_2O$, and typically further comprises $H_2$. $CO_x$ denotes CO, $CO_2$ or mixtures thereof, and may also be referred to as "carbon oxide", with CO and $CO_2$ being the two carbon oxide species, or as "CO and/or $CO_2$". The value of x denotes the number of oxygen atoms present per carbon atom in the carbon oxide fraction (i.e. $CO + CO_2$) of the feed gas, irrespective of any further oxygen and/or carbon atoms that may be present in the feed gas. Thus, x is in the range of 1 - 2, wherein x = 1 indicates pure CO and x = 2 indicates pure $CO_2$. An intermediate value for x indicates that a mixture of CO and $CO_2$ is present in the feed gas, which can readily be determined by the skilled person. As example, when x = 1.9, 1.9 oxygen atoms are present per carbon atom, meaning that the molar ratio of $CO:CO_2$ is 1:9. Likewise, when x = 1.5, the $CO:CO_2$ molar ratio is 1:1.

The process according to the invention operates efficiently using a feed gas wherein x is any value in the range 1 - 2. In an embodiment, the feed gas contains CO, or in other words x < 2, i.e. $1 \leq x < 2$. In an embodiment, $CO_2$ may be the major carbon oxide species and x is close to 2, e.g. x = 1.3 — 2, preferably x = 1.4 - 1.8. In an alternative embodiment, CO may be the major carbon oxide species and x is close to 1, e.g. x = 1 — 1.8, preferably x = 1 - 1.5, more preferably x = 1 - 1.2, or even x = about 1. Alternatively worded, the feed gas contains 0 — 10 mol% CO and 0 — 80 mol% $CO_2$, wherein the total content of $CO_x$ in the feed gas is at least 2 mol%, preferably in the range of 2 — 80 mol%, more preferably 2 — 60 mol%. Preferably, the feed gas contains 2 — 8 mol% CO and 0 — 30 mol% $CO_2$, wherein the total content of $CO_x$ in the feed gas is preferably in the range of 2 - 20 mol%, more preferably 3 — 10 mol%. A certain amount of $CO_2$ may thus be present in the feed. Any $H_2$ and $CO_2$ that is not converted in the process according to this embodiment, but ends up in respectively the $H_2$ product stream or the $CO_2$ product stream. The feed may also contain further gaseous components which are inert in the reaction according to the invention, such as inert gases (e.g. $N_2$, Ar, $CH_4$ and larger hydrocarbons, such as up to $C_4$) and contaminants arising from the industrial process, such as syngas originating from reforming or gasification of fossil or biogenic feed gas, from which the feed originates (e.g. $H_2S$, $NO_x$, etc.). Important for the operation of the process, especially for the pre-blowdown mode, is the partial pressure of the sum of CO and $CO_2$ (i.e. of $CO_x$) in the feed. Since all CO will be converted to $CO_2$ during the adsorption mode, this represents the amount of $CO_2$ present in the system and to be collected during the other modes.

In a preferred embodiment the feed gas is obtained from a water gas shift reactor that is fed with syngas. Syngas is known in the art and comprises CO and optionally further comprises $H_2$ and/or $CO_2$. In a water gas shift reactor steam is provided together with the syngas. The steam and CO react into $H_2$ and $CO_2$. Preferably the pressure swing process of the invention is preceded by a water gas shift reactor that is fed with syngas. For this preferred embodiment the output of the water gas shift reactor is the feed gas of the pressure swing adsorption process. Moreover for this preferred embodiment preferably only a part of the CO of the syngas that is fed to the water gas shift reactor is converted into $CO_2$ in the water gas shift reactor.

*Sorbent*

Sorbent for pressure swing adsorption of $CO_2$ are known in the art and any known type may be employed in the context of the present invention. The term sorbent may also indicate a combination of two or more sorbents. Preferably the sorbent is selected from the list consisting of alumina, activated carbons, zeolites, MOFs, molecular sieves and hydrotalcites. The alumina and/or hydrotalcite is preferably alkali-promoted. More preferably the sorbent is potassium promoted hydrotalcite, as disclosed e.g. in WO 2010/059055.

*Optimization*

Considering that a pressure swing adsorption process is a non-linear process and several process parameter affect the process outcome optimization is not straightforward. In this context, both computational and physical model simulations are expensive and time-consuming. Reduction the number of simulations is therefore beneficial for both costs as speed of optimization. For example for the latter in case the feed is changed in a running process the length of suboptimal operation of the process is reduced by a faster optimization.

Moreover if an inadequate optimization strategy is selected an optimal operation point may not be found; due to the non-linearity there is a risk for ending up in an asymptotic situation in which the sensitivity for one output parameter is high but the sensitivity for other output parameters is very low. In such situation the desired value for the other output parameters may not be reached. For example Najmi et al. (Separation and purification technology, 2016, 157 p80-92) point to the need of adjusting the duration of the adsorption step considering changing R and P independently was deemed insufficient for reaching the desired output.

The inventors now found that for a pressure swing adsorption process that for a specific feed in a first step by varying between subsequent cycles the ratio of the amount of rinse steam R divided by the amount of purge steam P while keeping the total amount of steam T constant an optimum can be identified in a more efficient way compared to conventional methods and/or the optimum is improved compared to conventional methods. Preferably at least one R/P ratio is selected for one constant total amount of steam T, more preferably at least 2 R/P ratios are selected for one constant total amount of steam, even more preferably at least 3 R/P ratios are selected for one constant total amount of steam. In a preferred embodiment the first step of varying R/P ends when the ratio of the carbon capture ratio divided by the carbon purity (CCR/CP) is in the range of 0.90 - 1.10, preferably in the range of 0.95 - 1.05, more preferably in the range of 0.97 - 1.03, even more preferably in the range of 0.98 - 1.02. Surprisingly at this range the model is in the sensitive area, so that CCR and CP can be further optimized together by only varying T and not the cycle time. It is believed that shape of the gaseous fronts in the various cycle steps is less sensitive to T changes when R/P is constant.

The optimization may be at one fixed total amount of steam T. In a preferred embodiment in a second step T is varied between subsequent cycles whilst keeping R/P constant. In this way CCR and CP can be further optimized together since both output parameters will vary in the same direction with a similar magnitude at a change of T. By fixing R/P and staying close to the diagonal solution in which CP is about CCR, the feed rate (which relates to productivity) and steam consumption (which relates to costs and energy usage) can be more directly and rapidly traded off, as the problem has only one control variable (the diagonal at which CP=CCR) and one manipulated variable (which is T at a fixed R/P).

Optionally, in a third step succeeding the first step or the second step when present, R and/or P are varied at a fixed total amount of steam T to further optimize CCR and CP. This latter step 3 makes it possible to accommodate a situation for which the desired CCR is not about equal to the desired CP. For such situation the optimization is still predictable and efficient, and results in an optimal solution by applying step 1 or applying the combined steps 1 and 2 since these steps provide for such optimization. In addition step 3 provides the opportunity to further tailor CCR and CP.

The design of a pressure swing adsorption process comprises the sorbent bed properties, the dimensioning of the installation, the cycle design and the process parameters such as pressure and steam inputs. The cycle design concerns the start and stop time of each mode for a column. When in operation the dimensioning is fixed. Preferably the cycle design is also fixed, considering that altering the cycle design in an operational environment is invasive and complex and therefore costly and it takes considerable time to reach a new equilibrium. Moreover most often the cycle time $t_c$ is lengthened and therefore the capacity of the process reduces which is undesirable. Therefore in a preferred embodiment of the invention the cycle time $t_c$ is kept constant during optimization. More preferably the time of each cycle mode is kept constant during optimization, even more preferably the time of each cycle mode is kept constant during optimization and subsequent operation.

Typically a pressure swing adsorption process is run at a fixed feed gas composition and feed gas flux, however in some cases the feed gas composition and/or feed gas flux changes during operation. During optimization, preferably the feed gas composition and feed gas flux is constant. A changing feed gas composition or flux necessitates new set points. In case during operation the feed gas composition and feed gas flux changes, preferably new optimized set points are selected. In one preferred embodiment of the invention the optimization is triggered by a change in feed gas composition and/or feed gas flux wherein preferably the cycle time $t_c$ is kept constant upon the change in feed gas composition and/or feed gas flux.

The optimization of the current invention concerns modifying the set points for R/P and T. In a preferred embodiment of the invention R/P and T are the only set points that are modified during optimization. The optimization preferably concludes with selecting a ratio of the amount of rinse steam R divided by the amount of purge steam P and a total amount of steam T for further operating the pressure swing adsorption process. Preferably this selected ratio of the amount of rinse steam R divided by the amount of purge steam P and a total amount of steam T is constant until a change in feed gas composition and/or feed gas flux and/or a different CP and CCR is required.

In the context of process optimization the optimal design for a pressure swing adsorption process aims to 1) maximize separation performance (i.e. product recovery and purity; CCR and CP), 2) optimize energy usage (i.e. steam usage) and 3), minimize processing costs. The energy usage forms a part of the processing costs. A process that uses less energy is more environmentally friendly. In the context of the current invention an optimal balance between CCR, CP and steam usage T is strived for. A high CCR, a high CP and a low T is in general aimed for. These output parameters may be in competition in the sense that improving one output parameter may deteriorate a different output parameter.

Preferably in an embodiment of the invention a target for CCR and CP is set and R/P is selected that provide for a T that is found lowest for the different varying between subsequent cycles, a target for T and CP is set and R/P is selected that provide for a CCR that is found highest for the different varying between subsequent cycles, or a target for T and CCR is set and R/P is selected that provide for a CP that is found highest for the different varying between subsequent cycles. In a preferred embodiment a different total amount of steam $T_n$ is selected when, after two or more times varying between subsequent cycles the ratio of the amount of rinse steam R divided by the amount of purge steam P while keeping the total amount of steam T constant, the target CCR and CP is not obtained. Preferably after optimization the CCR, CP is equal or higher than the target for CCR, CP and/or after optimization T is equal or lower than the target for T.

In one embodiment preferably each step of the optimization includes a comparison of the process performance with a predetermined threshold process performance, wherein the process performance is defined as a range for CCR and a range for CP, and wherein the predetermined threshold process performance is that CCR and CP are both in the range of 80 - 100 mole%, preferably in the range of 90 - 100 mole%, more preferably in the range of 95 - 100 mole%. Preferably the optimization concludes when the process performance is in the range of the predetermined threshold process performance, and the selected values for R, P and T are used for further operating the pressure swing adsorption process.

After optimization preferably the carbon capture ratio and/or carbon purity are above 90 mole%, more preferably above 95 mole%; even more preferably the sum of the carbon capture ratio and the carbon purity is above 180 mole%, even more preferably the sum of the carbon capture ratio and the carbon purity is above 190 mole%, particularly preferably the carbon capture ratio and the carbon purity are above 90 mole%, most preferably above 95 mole%. Preferably after optimization the CCR and CP are both in the range of 80 - 100 mole%, more preferably in the range of 90 - 100 mole%, most preferably in the range of 95 - 100 mole%.

In a preferred embodiment after optimization T normalized for the amount of carbon fed to the system is equal or below 1.5, more preferably equal or below 1.2, even more preferably equal or below 1.0, most preferably equal or below 0.8. Preferably after optimization the carbon capture ratio and the carbon purity are above 90 mole% and T normalized for the amount of carbon fed to the system is equal or below 1.2, more preferably the carbon capture ratio and the carbon purity are above 95 mole% and T normalized for the amount of carbon fed to the system is equal or below 1.0.

In a preferred embodiment the target carbon capture ratio and/or the target carbon purity are above 90 mole%, more preferably above 95 mole%; even more preferably the sum of the target carbon capture ratio and the target carbon purity is above 180 mole%, even more preferably the sum of the target carbon capture ratio and the target carbon purity is above 190 mole%, particularly preferably the target carbon capture ratio and the target carbon purity are above 80 mole%, even more particularly preferably above 90%, most preferably above 95 mole%. In a preferred embodiment T normalized for the amount of carbon fed to the system is equal or below 1.5, more preferably equal or below 1.2, even more preferably equal or below 1.0, most preferably equal or below 0.8. Preferably the target carbon capture ratio and the target carbon purity are above 90 mole% and T normalized for the amount of carbon fed to the system is equal or below 1.2, more preferably the target carbon capture ratio and the target carbon purity are above 95 mole% and T normalized for the amount of carbon fed to the system is equal or below 1.0.

In a preferred embodiment in the second step T is lowered when CP and CCR are above the target CP and CCR and T is increased when CP and CCR are below the target CP and CCR.

In a preferred embodiment after optimization:

- T is lower at a same or higher sum of CCR and CP, or
- the sum of CCR and CP is higher and T is the same or lower

compared to before optimization;
more preferably after optimization:

- the CCR is the same or higher, the CP is the same or higher and T is lower,
- the CCR is higher, the CP is the same or higher and T is the same or lower, or
- the CCR is the same or higher, the CP is higher and T is the same or lower compared to before optimization.

*Simulation*

The method for optimization may be performed while the pressure swing adsorption process is in operation. In a preferred embodiment the method for optimization the carbon capture ratio CCR, carbon purity CP and/or amount of total steam T of a pressure swing adsorption process for separating $CO_2$ from a feed gas is carried out when the pressure swing adsorption process is in operation. In addition, the current state of the art on process simulation enables for sufficient predictive power to calculate optimal process parameters. In a preferred embodiment the method for optimization the carbon capture ratio CCR, carbon purity CP and/or amount of total steam T of a pressure swing adsorption process for separating $CO_2$ from a feed gas is carried out in a process simulation model wherein the optimization concludes with selecting a ratio of the amount of rinse steam R divided by the amount of purge steam P and a total amount of steam T and wherein the selected R/P and T are applied to the corresponding pressure swing adsorption process, preferably wherein the corresponding pressure swing adsorption process is in operation.

*Method for operating*

The invention also concerns a method for operating a pressure swing adsorption process for separating $CO_2$ from a feed gas, wherein the process comprises a plurality of columns each containing a sorbent and arranged in cyclic mode, wherein the carbon capture ratio, carbon purity and/or steam usage is optimized according to the method for optimization according to the invention. Preferably for this method for operation upon a change in feed gas composition and/or flux new R, P and T are selected based on the method for optimization according to the invention and/or to obtain a new target CP and/or CCR upon a change in feed gas composition and/or flux new R, P and T are selected based on the method for optimization according to the invention. The preferred embodiments of the method for optimization a pressure swing adsorption process of the invention also apply for the method for operation of a pressure swing adsorption process.

**Examples - Model simulation of a SEWGS reactor**

*Symbols*

| | | |
|---|---|---|
| CCR | %mole | Carbon Capture Ratio |
| CP | %mole | Carbon Purity |
| $GHSV_0$ | $Nm^3\ hr^{-1}\ m^{-3}$ | Reference feed gas hourly space velocity |
| GHSVc | $Nm^3\ hr^{-1}\ m^{-3}$ | Feed gas hourly space velocity |
| GHSVr | $(Nm^3\ hr^{-1}\ m^{-3})\ (Nm^3\ hr^{-1}\ m^{-3})^{-1}$ | Relative feed gas hourly space velocity |
| y | $mol\ mol^{-1}$ | Molar fraction |
| P | Bar | Total pressure |
| P0 | Bar | Reference pressure value |
| PF | $bar\ bar^{-1}$ | Pressure factor |
| R/P | $mol_{H2O}\ mol_{H2O}^{-1}$ | Rinse to purge steam ratio |
| S/Cr | $mol_{H2O}\ mol_C^{-1}$ | Rinse steam normalized for the amount of carbon fed to the system |
| S/Cp | $mol_{H2O}\ mol_C^{-1}$ | Purge steam normalized for the amount of carbon fed to the system |
| S/Ct | $mol_{H2O}\ mol_C^{-1}$ | Total steam normalized for the amount of carbon fed to the system |
| S/CO | $mol_{H2O}\ mol_{CO}^{-1}$ | Steam to CO ratio at WGS inlet |

*Definitions*

$$CCR = \frac{CO_2^{CO2P}}{CO^{Feed} + CO_2^{Feed}} \qquad (1)$$

$$CP = \frac{y_{CO2}^{CO2P}}{1 - y_{H2O}^{CO2P}} \qquad (2)$$

$$S/C_t = \frac{H_2O^R + H_2O^P}{CO^{Feed} + CO_2^{Feed}} \qquad (3)$$

$$S/C_r = \frac{H_2O^R}{CO^{Feed} + CO_2^{Feed}} \qquad (4)$$

$$S/C_p = \frac{H_2O^P}{CO^{Feed} + CO_2^{Feed}} \qquad (5)$$

$$S/CO = \frac{H_2O^{Feed}}{CO^{Feed}} \qquad (6)$$

$$R/P = \frac{S/C_r}{S/C_p} \qquad (7)$$

$$PF = \frac{P}{P_0} \qquad (8)$$

$$GHSVc = \frac{CO^{Feed} + CO_2^{Feed}}{V_{Bed}} \qquad (9)$$

$$GHSV_r = \frac{GHSVc}{GHSV_0} \qquad (10)$$

*Model*

A mathematical model of a SEWGS process is developed and implemented in MATLAB. This model is largely based on a SEWGS model by Boon et al. (Chemical Engineering Science, 2015 (122), p219-231). Specifically, it includes:

- Continuity, momentum, energy and species balances;
- WGS reaction kinetics and equilibrium relationships;
- Adsorption and desorption kinetics represented by linear driving force (LDF) method;
- $CO_2$-$H_2O$ dual interaction model with the K-HTC sorbent, which includes multi-site adsorption and nanopore condensation effects, as described by Coenen et al. (Chemical Engineering Journal, 2017 (314), p554-569) and Boon et al. (2015);
- Heat or reaction and heat of adsorption formulations [12];
- Valve equations;
- Pressure drop factor by Ergun approximation;
- Ideal gas law equation of states (EOS);
- Gas physical property models, including gaseous species' heat conductivity, specific heat capacity, diffusivity, viscosity and density relationships;
- Axial dispersion;
- Bed to wall radial heat transfer coefficient;

The resulting set of PDAE is solved numerically. Equations are discretized over the time and space according to the method of lines. Space discretization includes a combination of upwind, central difference and Barton schemes, as outlined by Boon et al. (2015). Time integration is achieved with a 1st order Euler scheme. Uniform grids of 200 and 50 points are used respectively for space and time. A cycle routine is added to the column model. The routine can sequentially simulate the various steps of an ideal single column cycle, by varying flow directions and boundary conditions, according to a prespecified cycle structure. Consequently, the model solution includes all relevant column transient profiles over time and space, for each cycle step.

*Parametric approach*

A systematic parametric approach is devised to analyse the STEPWISE separation performance at different feed pressure and steam inputs. The parametric approach comprises two steps: (1) a basis of design step, where an ideal single column schedule with null idle times is fixed, together with other basic process parameters and bed properties; and (2) a process parameters optimization step, whereby parametric sensitivities are conducted to achieve evaluate separation performances.

Separation performances are measured with Carbon Capture Ratio (CCR) and Carbon Purity (CP) indicators, as defined in Equations 1 and 2. Process parameters are systematically varied in order to find operating points whereby CCR and CP are (almost) equal. These points lie on the diagonal of a CCR/CP Pareto chart, and are referred as Pareto diagonal solutions, or diagonal solutions.

The systematic identification of diagonal solutions is proposed as a method to rapidly evaluate different sets of process parameters, in terms of separation performances. Essentially, the solution space order is reduced by combining $CO_2$ recovery and purity into a single indicator. For each set of parameters, diagonal solutions are then searched by tuning the feed flow rate, and consequent feed carbon loading, which is expressed as carbon gas hourly space velocity (GHSVc), and is defined in Equation 9. Every possible cycle design will have a characteristic gas front shape in each one of its step. The shape of these fronts is determined by the progression of the gaseous species over the sorbent bed, which results from the cycle design and steam amounts. The position of the diagonal solution, and its respective feed flow rate, are dependent on the sharpness and shape of these fronts. Thus the diagonal solution value can be used to compare different design choices, and identify steam amounts that simultaneously increase CCR and CP, or modify the amount of captured $CO_2$, while maintain CCR and CP unchanged. In order to show this trade-off between system throughput and energy consumption, the system is re-parametrized in terms of S/C variations. Instead of the conventional study of system performance in terms of S/Cr and S/Cp, a new variable is introduced to systematically track rinse and purge steam distribution at a fix total steam consumption. This is called the rinse-to-purge ratio (R/P), which is defined according to Equation 7.

*Basic assumptions*

Concerning cycle design, an ideal single column cycle structure, with zero idle times is assumed. In terms of steps, this is equivalent to the structure that is proposed by Boon et al (Chemical Engineering Science, 2015 (122), p219-231). The cycle includes adsorption and rinse steps at the same high pressure level. The rinse step is cocurrent with the feed. Subsequently, three cocurrent pressure equalization steps occur, to be followed by countercurrent blowdown and purge steps. Column pressure is then increased countercurrently with the pressure equalization products. At last, repressurization is conducted with a partial reflux of light $H_2$ product. Total cycle time is kept unchanged to evaluate S/C ratios and adsorption pressure performances. Individual step times variations to minimize number of columns and meet multi-bed scheduling constraints are outside the scope.

The feed gas is composition A comprising 14.54 mol% $H_2O$, 16.04 mol% $H_2$, 5.30 mol% CO, 29.68 mol% $CO_2$ and 34.44 mol% $N_2$. R, P and T are normalized on carbon load.

*Results - 1) Sensitivity of CP and CCR*

Optimal solutions for a pressure swing adsorption process for separating $CO_2$ from a feed gas are typically in the top right corner of a Pareto plot with CCR and CP on the axis. This usually difficult to achieve. CP and CCR of the SEWGS process for a given reactor geometry are correlated to the supplied feed gas, rinse and purge steam amounts. The process is highly nonlinear towards process parameters, as figure 1 and 2 demonstrate. The figures concern Pareto plots of CCP and CR as a function of P, R and feed rate. In each figure the effect of the feed rate (kmole carbon per second) is plotted for two combinations of P and R. Strikingly with a relative small difference in rinse steam R (figure 1) or purge steam P (figure 2) the effect of the feed rate on CCP and CR is different. Moreover, whilst for the combination of P=0.6 and R=0.3 and of P=1.0 and R=0.3 only is asymptotic towards low feed rates, the combination of P=0.6 and R=0.1 is also asymptotic towards high feed rates.

In addition, for conventional optimization methods the purge and rinse steam amounts are separately manipulated to optimize CP and CCR. However this bears the risk of a suboptimal solution as figures 1 and 2 demonstrate. Reason is that CP and CCR do not move in the same direction upon change of R or P. Increasing the rinse amount has a positive effect on CP whist at the same time CCR is reduced as is demonstrates in figure 1. Increasing R by going from P=0.6 and R=0.1 to P=0.6 and R=0.3 at an about equal flow rate of 1.24 (1.25) increases CP but reduces CCR. In figure 2, going from P=0.6 and R=0.1 to P=0.7 and R=0.1 (So increasing P) increases CCR but reduces CP at an about equal flow rate of 1.24.

Given the system non-linearity, it is not easy to balance these two effects. When these two variables are parametrized (i.e. only one is changed at the time), it is therefore possible that the optimal solution is missed, as the sum of the reduction effects may be larger than the improvements. This is especially the case since the size of these effects may differ considerably and unpredictably for different flow rates R's and P's; as can been seen in figure 1. The asymptotic solution towards high flow rates of the combination of P=0.6 and R=0.1 may lead to a large change of CP or CCR at a modest change of P or R, something that may not be expected from the combination of P=0.6 and R=0.3.

*Results - 2) Optimization according to the invention*

A different approach is to parametrise the total steam consumption and the rinse to purge ratio (R/P). This parametrization approach offers a more favourable and inherent convergence path. This approach is demonstrated in figure 3. In a first step 3 different R/P ratios are tested at a fixed amount of T=0.8 (R/P is 0.3/0.5, 0.2/0.6 and 0.1/0.7) with the objective of both CCR and CP $\geq$ 94%. Already a converging solution is found for which CCR and CP are above 0.94 (R/P= 0.2/0.6). Moreover due to the predictable extrapolation and the sensitivity of both CP and CCR in this method an optimum can be extrapolated. In contrary for conventional optimization routes when starting at R/P = 0.1/0.7 first increasing P would move away from the ideal solution (at R/P = 0.1/1.0 CP lowers to 92%) and only after increasing R a solution is found for which both CCR and CP ≥ 94%. T is 1.2 at this solution, which is higher than the optimum of the inventive method (0.8). Also when starting at R/P = 0.3/0.5 increasing P would lead to an acceptable solution at R/P = 0.3/0.6 but T is 0.9 and therefore higher than the optimum of the inventive method (0.8). So conventional method bear the risk of needing more steps to come to an optimum and at the same time ending with a higher T than is needed.

The asymptotic behaviour of a pressure swing adsorption process for separating $CO_2$ from a feed gas can also be seen in figure 3, increasing R at P=1.0 increases CP but lowers CCR whilst increasing P at R=0.3 leads to an increase of CCR but lowers CP.

Moreover if a higher CP and CCR is required, in a second step only T needs to be varied at the fixed R/P ratio. In figure 3 a target area of CCR and CP ≥ 97% is present. Moving from T=0.8 to T=1.3 (from R/P 0.2/0.6 to 0.3/1.0) whilst keeping R/P about constant leads directly to an optimized solution, whilst changing R and P independently from R/P 0.2/0.6 to 0.3/0.6 or 0.2/1.0 towards 0.3/1.0 needs more steps and bears the risk of being in an insensitive part of the solution space so that no solution can be found. In addition, further optimizations are more straightforward for the inventive method considering only T needs to be varied.

*Results - 3) Optimization according to the invention*

In a second experiment R/P is varied at fixed T at two different flow rates. At a normalized flow rate ($GHSV_r$) of 1.17 R/P = 0.09 at T=1.1 for the target CCR and CP ≥ 95%. At a normalized flow rate ($GHSV_r$) of 0.8 R/P = 0.6 at T=0.8 for the target CCR and CP ≥ 95%. This proves the system is highly non-linear and a robust optimization routine is needed.

**Claims**

1. Use of the ratio of the amount of rinse steam R divided by the amount of purge steam P (R/P) at a fixed amount of total steam T for optimization the carbon capture ratio CCR, carbon purity CP and/or T of a pressure swing adsorption process for separating $CO_2$ from a feed gas, wherein the process comprises a plurality of columns each containing a sorbent and arranged in cyclic mode,
   wherein each cycle contains an adsorption mode, a rinse mode and a purge mode, wherein:

   - in the adsorption mode, the column is being fed with the feed gas, thereby forming a sorbent material loaded with $CO_2$;
   - in the rinse mode, the column is rinsed with rinse steam at a pressure $P_R$; and
   - in the purge mode, the column is purged with purge steam at a pressure $P_P$.

2. A method for optimization the carbon capture ratio CCR, carbon purity CP and/or amount of total steam T of a pressure swing adsorption process for separating $CO_2$ from a feed gas, wherein the process is performed in a plurality of columns each containing a sorbent and arranged in cyclic mode,

   wherein each cycle contains an adsorption mode, a rinse mode and a purge mode, wherein:

   - in the adsorption mode, the column is being fed with the feed gas, thereby forming a sorbent material loaded with $CO_2$;
   - in the rinse mode, the column is rinsed with rinse steam at a pressure $P_R$; and
   - in the purge mode, the column is purged with purge steam at a pressure $P_P$;

   and wherein the method comprises a first step of varying between subsequent cycles the ratio of the amount of rinse steam R divided by the amount of purge steam P (R/P) while keeping the total amount of steam T constant.

3. The method according to claim 2, wherein the first step of varying R/P ends when the ratio of the carbon capture ratio divided by the carbon purity (CCR/CP) is in the range of 0.90 - 1.10, preferably in the range of 0.95 - 1.05, more preferably in the range of 0.98 - 1.02.

4. The method according to claim 2 or 3, wherein in a second step T is varied between subsequent cycles whilst keeping R/P constant.

5. The method according to any one of any one of claims 2-4 or the use according to any one of claim 1 wherein after optimization the CCR and CP are both in the range of 80 - 100 mole%, preferably in the range of 90 - 100 mole%, more preferably in the range of 95 - 100 mole%.

6. The method according to any one of claims 2-5 or the use according to claim 1 or 5, wherein the cycle time $t_c$ is constant during optimization.

7. The method according to any one of claims 2-6 or the use according to claim 1 or 5-6 wherein the feed gas composition and feed gas flux is constant during optimization.

8. The method according to any one of any one of claims 2-7 or the use according to any one of claim 1 or 5-7 wherein the optimization is triggered by a change in feed gas composition and/or flux, preferably wherein the cycle time $t_c$ is kept constant upon the change in feed gas composition and/or flux.

9. The method according to any one of any one of claims 2-8 or the use according to any one of claim 1 or 5-8 wherein each step of the optimization includes a comparison of the process performance with a predetermined threshold process performance, wherein the process performance is defined as a range for CCR and a range for CP, and wherein the predetermined threshold process performance is that CCR and CP are both in the range of 80 - 100 mole%, preferably in the range of 90 - 100 mole%, more preferably in the range of 95 - 100 mole%, preferably wherein the optimization concludes when the process performance is in the range of the predetermined threshold process performance, and the selected values for R, P and T are used for further operating the pressure swing adsorption process.

10. The method according to any one of any one of claims 2-9 or the use according to any one of claim 1 or 5-9 wherein after optimization:

   - T is lower at a same or higher sum of CCR and CP, or
   - the sum of CCR and CP is higher and T is the same or lower

   compared to before optimization;
   preferably after optimization:

   - the CCR is the same or higher, the CP is the same or higher and T is lower,
   - the CCR is higher, the CP is the same or higher and T is the same or lower, or
   - the CCR is the same or higher, the CP is higher and T is the same or lower compared to before optimization.

11. The method according to any one of any one of claims 2-10 or the use according to any one of claim 1 or 5-10 wherein the feed gas comprises $CO_2$ and $H_2$.

12. The method according to any one of any one of claims 2-11 or the use according to any one of claim 1 or 5-11, wherein the feed gas is obtained from a water gas shift reactor that is fed with syngas, and/or wherein the feed gas comprises $CO_x$, wherein x = 1 - 2, and $H_2O$ and the sorbent material is a catalyst for the formation of $H_2$ and $CO_2$ from the feed gas.

13. The method according to any one of any one of claims 2-12 or the use according to any one of claim 1 or 5-12, wherein $P_R$ is in the range of 5 - 50 bar and Pp is in the range of 1 - 5 bar.

14. The method according to any one of any one of claims 2-13 or the use according to any one of claim 1 or 5-13, wherein the sorbent material is selected from the group consisting of alumina, hydrotalcites and molecular sieves wherein preferably the alumina or hydrotalcite is alkali-promoted, preferably the sorbent material is an alkali-promoted hydrotalcite material, more preferably the sorbent material is potassium promoted hydrotalcite.

15. A method for operating a pressure swing adsorption process for separating $CO_2$ from a feed gas, wherein the process comprises a plurality of columns each containing a sorbent and arranged in cyclic mode,

   wherein the CCR, CP and/or T is optimized according to the method for optimization according to any one of claims 2-14,
   preferably wherein upon a change in feed gas composition and/or flux new R, P and T are selected based on the method of any one of claim 2-14.

## Fig. 1

**Rinse steam variation**

## Fig. 2

**Purge steam variation**

## Fig. 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOON JURRIAAN ET AL: "High-temperature pressure swing adsorption cycle design for sorption-enhanced water-gas shift", CHEMICAL ENGINEERING SCIENCE, vol. 122, 2 October 2014 (2014-10-02), pages 219-231, XP055905884, GB ISSN: 0009-2509, DOI: 10.1016/j.ces.2014.09.034 * last paragraph "the performance indicators of the SEWGS process are formulated in terms of carbon capture ration and CO2 purity"; page 222, right-hand column * * page 223; figure 3 * * page 223, paragraph 2.3 * | 1-15 | INV. B01D53/04 B01D53/047 C01B3/00 |
| A | ZHU XUANCAN ET AL: "Two-train elevated-temperature pressure swing adsorption for high-purity hydrogen production", APPLIED ENERGY, ELSEVIER SCIENCE PUBLISHERS, GB, vol. 229, 23 August 2018 (2018-08-23), pages 1061-1071, XP085512583, ISSN: 0306-2619, DOI: 10.1016/J.APENERGY.2018.08.093 * abstract * | 1-15 | |

-/--

TECHNICAL FIELDS SEARCHED (IPC)

B01D
C01C
C01B

The present search report has been drawn up for all claims

| Place of search | Date of completion of the search | Examiner |
|---|---|---|
| Munich | 30 March 2022 | Pöhlmann, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt<br>European Patent Office<br>Office européen des brevets | **EUROPEAN SEARCH REPORT** | Application Number<br>**EP 21 20 2999** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WRIGHT A ET AL: "Reduction in the cost of pre-combustion CO"2 capture through advancements in sorption-enhanced water-gas-shift",<br>ENERGY PROCEDIA, ELSEVIER, NL,<br>vol. 1, no. 1,<br>1 February 2009 (2009-02-01), pages 707-714, XP026471940,<br>ISSN: 1876-6102, DOI:<br>10.1016/J.EGYPRO.2009.01.093<br>[retrieved on 2009-02-01]<br>* abstract * | 1-15 | |

TECHNICAL FIELDS SEARCHED (IPC)

The present search report has been drawn up for all claims

| Place of search | Date of completion of the search | Examiner |
|---|---|---|
| Munich | 30 March 2022 | Pöhlmann, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010059055 A

### Non-patent literature cited in the description

- **FIRST, REIJERS et al.** *Energy Procedia,* vol. 2011 (4), 1155-1161
- **BOON et al.** *Chemical Engineering Science,* vol. 2015 (122), 219-231
- **JANSEN et al.** *Energy Procedia,* vol. 2011 (37), 2265-2273
- **NAJMI et al.** *Separation and purification technology,* vol. 2016 (157), 80-92
- **NAJMI et al.** *Separation and purification technology,* 2016, vol. 157, 80-92
- **COENEN et al.** *Chemical Engineering Journal,* vol. 2017 (314), 554-569